# EUROPÄISCHE PATENTSCHRIFT

(11) **EP 4 100 666 B1**
(45) Veröffentlichungstag und Bekanntmachung des Hinweises auf die Patenterteilung: **06.05.2026**
(21) Anmeldenummer: 21701515.5
(22) Anmeldetag: 22.01.2021
(51) Int. Cl.: F16H 37/04

(54) **WENDEGETRIEBEEINHEIT**
REVERSING GEAR UNIT
ENSEMBLE MÉCANISME D'INVERSION

(30) Priorität: 07.02.2020 DE 102020201500
(43) Veröffentlichungstag der Anmeldung: 14.12.2022
(73) Patentinhaber: ZF Friedrichshafen AG, 88046 Friedrichshafen (DE)
(72) Erfinder: MAYER-JABS, Reinhold, 88250 Weingarten (DE)
(74) Vertreter: ZF Friedrichshafen AG
(86) Internationale Anmeldenummer: PCT/EP2021/051405
(87) Internationale Veröffentlichungsnummer: WO 2021/156074

(56) Entgegenhaltungen:
- WO-A1-2011/056344
- DE-A1- 102012 207 976
- DE-A1- 2 758 506

## Beschreibung

Die Erfindung bezieht sich auf eine Wendegetriebeeinheit gemäß der im Oberbegriff von Anspruch 1 definierten Art.

Aus der DE 27 58 506 A1 ist ein Geschwindigkeits-Wechselgetriebe bekannt, mit einer Antriebswelle, einer konzentrisch zu der Antriebswelle angeordneten Hauptwelle und mit zwei parallel zu der Hauptwelle angeordneten Nebenwellen. Die Nebenwellen werden auch Vorgelegewellen genannt. Jede der beiden Nebenwellen weist dabei einen ersten Teil und einen zweiten Teil auf, die koaxial zueinander angeordnet sind. Eine Zwischenzahnradanordnung ist bei jeder Nebenwelle dazu vorgesehen, die beiden Teile jeder Nebenwelle miteinander zu verbinden.

Aus der DE 10 2012 207 976 A1 ist eine Wendestufe für ein Kraftfahrzeug oder ein Schienenfahrzeug bekannt. Durch eine Leistungsaufteilung kann in einem ersten Kupplungszustand einer zugeordneten Kupplungseinrichtung eine Kraft- und/oder Drehmomentübertragung von einer Antriebswelle zu einer Abtriebwelle über zwei parallele Leistungspfade jeweils über eine Vorgelegewelle erfolgen. Dies kann sich vorteilhaft auf die Dimensionierung der Wendestufe auswirken. In einem zweiten Kupplungszustand der genannten Kupplungseinrichtung kann die Antriebsleistung über einen weiteren Leistungspfad von der Antriebswelle über die Kupplungseinrichtung zu der Abtriebswelle erfolgen. Dabei ist in den beiden parallelen Leistungspfaden jeweils ein Zahnrad als Zwischenrad zwischen der Antriebswelle und der jeweils zugeordneten Vorgelegewelle angeordnet, wobei die Zwischenräder in dem ersten Kupplungszustand einen Drehrichtungswechsel der Abtriebswelle bewirken.

Der vorliegenden Erfindung liegt die Aufgabe eine solche Wendestufe bzw. Wendegetriebeeinheit weiter zu verbessern. Insbesondere sollen die Produktion, Montage und der Anbau einer solchen Wendegetriebeeinheit optimiert werden.

Diese Aufgabe wird durch eine Wendegetriebeeinheit mit den Merkmalen des Anspruchs 1 gelöst. Vorteilhafte weitere Ausführungsformen der Erfindung sind in den abhängigen Ansprüchen angegeben.

Demnach wird eine Wendegetriebeeinheit vorgeschlagen, die eine Antriebswelle und eine koaxial zu der Antriebswelle angeordnete Abtriebswelle, eine erste und eine zweite Vorgelegewelle und eine Kupplungseinrichtung umfasst. Die beiden Vorgelegewellen können vorteilhaft parallel zu der Antriebswelle angeordnet sein.

In einem ersten Kupplungszustand der genannten Kupplungseinrichtung sind die Antriebswelle und die Abtriebswelle über einen über die erste Vorgelegewelle verlaufenden ersten Leistungspfad und über einen über die zweite Vorgelegewelle verlaufenden zweiten Leistungspfad miteinander gekoppelt. In diesem ersten Kupplungszustand findet also eine Leistungsaufteilung auf die beiden parallelen Leistungspfade statt, wodurch die einzelnen Bauteile in den beiden Leistungspfaden geringer dimensioniert werden können und sich auch im Hinblick auf die Abmessungen und Anordnung der Wendegetriebestufe Vorteile für bestimmte Anwendungen ergeben.

In einem zweiten Kupplungszustand der Kupplungseinrichtung ist die Antriebswelle und die Abtriebswelle über einen über die Kupplungseinrichtung verlaufenden dritten Leistungspfad miteinander gekoppelt. In dem zweiten Kupplungszustand findet demnach keine Leistungsaufteilung statt. Der dritte Leistungspfad verläuft nicht mehr über die Vorgelegewellen, sondern direkt von der Antriebswelle über die Kupplungseinrichtung zu der koaxial zur Antriebswelle angeordneten Abtriebswelle. Mit anderen Worten verläuft der dritte Leistungspfad entlang einer Zentralachse der Wendegetriebeeinheit, wobei die Zentralachse koaxial zu der Antriebswelle und der Abtriebswelle angeordnet ist.

Um nun eine für die Wendefunktion der Wendegetriebeeinheit erforderliche Drehrichtungsumkehr zu erreichen, ist in dem ersten und zweiten Leistungspfad jeweils ein Zwischenrad zwischen der Antriebswelle und der jeweils zugeordneten Vorgelegewelle angeordnet, sodass durch einen Wechsel vom ersten Kupplungszustand zum zweiten Kupplungszustand ein Drehrichtungswechsel der Abtriebswelle bewirkbar ist. Neben dem ersten und dem zweiten Kupplungszustand kann noch ein dritter Kupplungszustand vorgesehen sein, in dem der Leistungsfluss zwischen der Antriebswelle und der Abtriebswelle mechanisch unterbrochen ist. Bei einer Ausführung der Kupplungseinrichtung mit einer Schaltmuffe kann der dritte Kupplungszustand beispielsweise einer Mittelstellung bzw. Neutralstellung der Schaltmuffe entsprechen.

Die Zwischenräder in den beiden Leistungspfaden weisen jeweils eine erste Zwischenradverzahnung und eine zweite Zwischenradverzahnung auf, wobei jeweils die erste Zwischenradverzahnung mit einem verdrehfest auf der Antriebswelle angeordneten Antriebszahnrad und die zweite Zwischenradverzahnung mit einer verdrehfest auf der zugeordneten Vorgelegewelle angeordneten ersten Vorgelegeverzahnung im Eingriff stehen. Dazu sind die beiden Zwischenradverzahnungen axial zueinander versetzt angeordnet. Die beiden Zwischenradverzahnungen sind also räumlich getrennt voneinander angeordnet. Der Eingriff zwischen dem Antriebszahnrad auf der Antriebswelle und dem Zwischenrad findet in einer anderen axialen Ebene statt, als der Eingriff zwischen dem Zwischenrad und der Vorgelegeverzahnung. Daraus ergibt sich der Vorteil, dass keine Wechselbeanspruchung in Form einer Zahnfußspannung des Zwischenrads stattfindet. Stattdessen erfolgt nur eine schwellende Belastung an allen Verzahnungen, das heißt, dass eine Zahnfußbiegung immer in derselben Richtung erfolgt. Folglich ist der Zahnfuß einer geringeren Beanspruchung ausgesetzt. Die einzelnen Verzahnungen können dadurch schmaler ausgeführt und mit einem geringeren Aufwand gefertigt werden. So kann beispielsweise ein Fertigungsschritt eingespart werden, bei dem der Zahnfuß durch Kugelstrahlen bearbeitet wird, um die geforderten Sicherheiten bezüglich der Zahnfußspannung bei Wechselbeanspruchung zu erreichen. Der für die zusätzliche Verzahnungsstufe zwischen der zweiten Zwischenradverzahnung und der Vorgelegeverzahnung benötigte axiale Bauraum kann vorteilhaft beispielsweise genutzt werden, um eine Schaltmuffe oder andere Teile der Kupplungseinrichtung ebenfalls innerhalb dieses axialen Bauraums anzuordnen, sodass die Gesamtlänge der Wendegetriebeeinrichtung in axialer Richtung möglichst nicht verlängert wird.

Ein weiterer Vorteil ergibt sich im Hinblick auf die Getriebeübersetzung, welche durch entsprechende Festlegung der beiden Zwischenradverzahnungen gezielt beeinflusst werden kann. Besonders vorteilhaft kann dadurch eine Übersetzung von genau -1,0 im ersten Kupplungszustand, also in dem ersten und zweiten Leistungspfad erreicht werden. Dies hat wiederum zur Folge, dass im ersten und im zweiten Kupplungszustand exakt dieselbe Übersetzung vorliegt, weil in dem beschriebenen zweiten Kupplungszustand ebenfalls eine Übersetzung von 1,0 vorliegt. Eine solche Wendegetriebeeinheit kann demnach für zwei entgegengesetzte Fahrtrichtungen exakt die gleiche Übersetzung realisieren. Dies wird beispielsweise häufig bei Schienenfahrzeugen gefordert, bei denen zwei gleichwertige Fahrtrichtungen erforderlich sind. Gleichwertige Fahrtrichtungen bedeuten, dass in beiden Fahrtrichtungen die gleichen Gesamtübersetzungsstufen und damit die gleichen Geschwindigkeitsbereiche zur Verfügung stehen. Bei der eingangs genannten herkömmlichen Wendestufe ergeben sich dagegen konstruktive Einschränkungen im Zusammenhang mit einer angestrebten Übersetzung von -1,0, weil hier der Zahneingriff zwischen dem Antriebszahnrad auf der Antriebswelle und dem Zwischenrad in einer axialen Ebene angeordnet ist und eine Zahnradstufe weniger vorliegt, in der die Übersetzung angepasst werden kann.

Der Leistungsfluss wird über eine zweite Vorgelegeverzahnung auf jeder Vorgelegewelle und ein damit im Eingriff stehendes Abtriebszahnrad von den Vorgelegewellen auf die Abtriebswelle geleitet, wobei das Abtriebszahnrad mit der Abtriebswelle verdrehfest verbindbar ist.

Die erste und die zweite Vorgelegeverzahnung auf jeder Vorgelegewelle können dabei die gleiche Zähnezahl aufweisen und vorzugsweise auch ansonsten identisch ausgeführt sein. Dadurch können die erste und die zweite Vorgelegeverzahnung auf jeder Vorgelegewelle in einem einzigen Arbeitsgang gefertigt werden. Durch die Bearbeitung der ersten und der zweiten Vorgelegeverzahnung in einem Arbeitsgang können Teilungsfehler zwischen den beiden Verzahnungen vermieden oder zumindest deutlich reduziert werden. Teilungsfehler zwischen den Vorgelegeverzahnungen auf einer Vorgelegewelle entstehen durch Fertigungstoleranzen beim Herstellen der Vorgelegeverzahnungen in separaten Arbeitsgängen bzw. Fertigungsschritten. Je geringer derartige Teilungsfehler ausfallen, umso gleichmäßiger wird die Leistung über den ersten und zweiten Leistungspfad, d.h. über die beiden Vorgelegewellen aufgeteilt, bzw. die radiale Verlagerung des schwimmend gelagerten Abtriebszahnrades reduziert. Des Weiteren können dadurch Axialkräfte innerhalb der schrägverzahnten Zahnräder bzw. Verzahnungen komplett oder zumindest nahezu ausgeglichen werden. Ferner können durch identische Vorgelegeverzahnungen Werkzeug- und Bearbeitungskosten reduziert werden, weil gleiche Werkzeuge zur Herstellung der Verzahnungen mit gleichem Modul und gleichem Schrägungswinkel verwendet werden können.

Die identische Ausführung der ersten und zweiten Vorgelegeverzahnung ist zum einen deshalb möglich, weil das Antriebszahnrad durch die axial zueinander versetzten beiden Zwischenradverzahnungen mit einem axialen Abstand zu der ersten Vorgelegeverzahnung angeordnet ist. Dadurch ist ein radialer Hinterschnitt, das heißt eine radiale Überlappung zwischen dem Antriebszahnrad und der ersten Vorgelegeverzahnung möglich. Das heißt, dass die radialen Abmessungen der ersten Vorgelegeverzahnung nicht beschränkt sind durch die radiale Abmessung bzw. den Durchmesser des Antriebszahnrads. Zum anderen kann eine geforderte Übersetzung in dem ersten und zweiten Leistungspfad mittels entsprechender Auswahl der ersten und zweiten Zwischenradverzahnung realisiert werden und dadurch auf eine weitere Übersetzungsveränderung durch verschiedene Vorgelegeverzahnungen verzichtet werden.

Vorzugsweise ist zusätzlich vorgesehen, dass das Abtriebszahnrad mit radialem Spiel auf der Abtriebswelle gelagert ist. Mit anderen Worten kann das Abtriebszahnrad mit radialem Freigang oder radialem Freiheitsgrad auf der Abtriebswelle gelagert sein. Eine solche Lagerung wird auch schwimmende Lagerung genannt und führt dazu, dass der Leistungsfluß über den ersten und den zweiten Leistungspfad gleichmäßig aufgeteilt wird. Das heißt, dass in dem ersten Kupplungszustand über jede der beiden Vorgelegewellen jeweils zumindest annähernd 50 Prozent der Antriebsleistung geführt wird. Bereits durch die oben erläuterten identischen Vorgelegeverzahnungen auf jeder Vorgelegewelle kann eine mehr oder weniger gleichmäßige Leistungsaufteilung erreicht werden. Bei entsprechend hohen Anforderungen bei der jeweiligen Anwendung kann mithilfe des radialen Spiels am Abtriebszahnrads auf der Abtriebswelle eine nahezu exakt gleichmäßige Leistungsaufteilung sichergestellt werden.

Gemäß einer weiteren Ausführung können jeweils die erste und die zweite Vorgelegeverzahnung auf jeder Vorgelegewelle und die erste und die zweite Zwischenradverzahnung auf jedem Zwischenrad die gleiche Zähnezahl aufweisen. Auf diese Weise kann die Komplexitiät der im Aufbau und der Fertigungsaufwand weiter reduziert werden. Bei dieser Ausführung ist auch eine identische Ausführung der ersten und der zweiten Zwischenradverzahnung möglich. Dadurch können die erste und die zweite Zwischenradverzahnung in einem einzigen Arbeitsgang, und vorzugsweise in Form eines einstückigen Zwischenrades, gefertigt werden. Durch die Bearbeitung der ersten und der zweiten Zwischenradverzahnung in einem Arbeitsgang können Teilungsfehler zwischen den beiden Verzahnungen vermieden werden, die sonst in separaten Arbeitsgängen bzw. Fertigungsschritten auftreten können. Je geringer derartige Teilungsfehler ausfallen, umso gleichmäßiger wird die Leistung über den ersten und zweiten Leistungspfad aufgeteilt und die radiale Verlagerung des schwimmend gelagerten Abtriebszahnrades reduziert. Des Weiteren können dadurch Axialkräfte innerhalb der schrägverzahnten Verzahnungen komplett oder zumindest nahezu ausgeglichen werden. Ferner können durch identische Vorgelegeverzahnungen Werkzeug- und Bearbeitungskosten reduziert werden, weil gleiche Werkzeuge zur Herstellung der Verzahnungen mit gleichem Modul und gleichem Schrägungswinkel verwendet werden können.

In einer weiteren Ausführung der Erfindung kann die erste und die zweite Vorgelegewelle gegenüber einer jeweils zugeordneten Zwischenradwelle axial in Richtung einer Abtriebsseite der Wendegetriebeeinheit versetzt angeordnet werden. Als Abtriebsseite wird die Seite der Wendegetriebeeinheit verstanden, auf der ein Ende der Abtriebswelle aus einem Gehäuse der Wendegetriebeeinheit herausragt. Die axial zur Abtriebsseite hin versetzten Vorgelegewellen erleichtern den Anbau der Wendegetriebeeinheit an ein anderes Getriebe, insbesondere an ein Hauptgetriebe des jeweiligen Antriebsstrangs. In einer bevorzugten Ausführung ist die Wendegetriebeeinheit dazu vorgesehen und geeignet an ein herkömmliches Gangwechselgetriebe, beispielsweise ein Lastschaltgetriebe oder ein automatisiertes Schaltgetriebe, angebaut zu werden. Zum Anbau an das andere Getriebe ist auf der Antriebsseite der Wendegetriebeeinheit ein Anschraubflansch vorgesehen. In dem durch die versetzt angeordneten Vorgelegewellen frei gewordenen Bauraum können nun vorteilhaft Verschraubungselemente für den Schraubflansch eingefügt und angeordnet werden, sodass der Schraubflansch mit geringeren radialen Abmessungen realisiert werden kann.

Die Zwischenradwelle ist die Welle, auf der die Zwischenräder angeordnet sind. Dabei können die Zwischenräder jeweils rotierbar auf einer gehäusefesten Zwischenradwelle gelagert sein. In diesem Fall kann die Zwischenradwelle auch als Bolzen oder Achse bezeichnet werden. Alternativ kann eine rotierbar in einem Gehäuseteil der Wendegetriebeeinheit gelagerte Zwischenradwelle verwendet werden, auf der die Zwischenräder verdrehfest angeordnet sind. Eine solche Zwischenradwelle kann auch aus einem Stück mit dem zugeordneten Zwischenrad, als so genannte Ritzelwelle gefertigt werden. Im Hinblick auf den benötigten Bauraum kann die erste Alternative kompakter ausgeführt werden, weil dabei die Lagerstellen, insbesondere in Form von Wälzlagern, radial innerhalb der Zwischenradwellenverzahnung angeordnet werden können. Somit ergibt sich gegenüber der zweiten Alternative insbesondere ein Bauraumvorteil in axialer Richtung.

Die Kupplungseinrichtung ist vorzugsweise koaxial zu der Abtriebswelle angeordnet. Die Kupplungseinrichtung kann insbesondere eine axial verschiebbare Schaltmuffe umfassen, mittels derer im zweiten Kupplungszustand ein Ende der Antriebswelle mit einem Ende der dazu koaxial angeordneten Abtriebswelle verbunden ist.

Im Folgenden werden die Erfindung und deren Vorteile anhand des in den anliegenden Figuren dargestellten Ausführungsbeispiels noch näher erläutert.

Dabei zeigt die
- Fig. 1: eine schematische Darstellung einer erfindungsgemäßen Wendegetriebeeinheit;
- Fig. 2: eine Schnittdarstellung eines Ausschnitts einer erfindungsgemäßen Wendegetriebeeinheit;
- Fig. 3: eine Schnittdarstellung eines Ausschnitts einer erfindungsgemäßen Wendegetriebeeinheit mit einer anderen Schnittebene und
- Fig. 4: eine Schnittdarstellung eines Ausschnitts einer erfindungsgemäßen Wendegetriebeeinheit mit noch einer anderen Schnittebene.

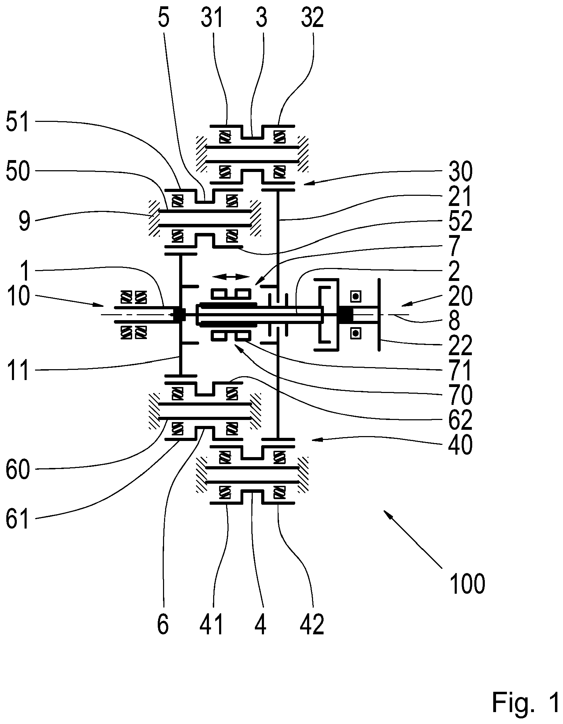

Die in Fig. 1 dargestellte Wendegetriebeeinheit 100 umfasst eine Antriebswelle 1 und eine koaxial zu der Antriebswelle 1 angeordnete Abtriebswelle 2. Die Antriebswelle 1 und die Abtriebswelle 2 sind beide rotierbar um eine Zentralachse 8 der Wendegetriebeeinheit 100 angeordnet. Über die Antriebswelle 1 wird im Betrieb eine Antriebsleistung in Form von Drehmoment und Drehbewegung in die Wendegetriebeeinheit 100 eingeleitet. Die Antriebswelle 1 kann dazu beispielsweise mit einer Getriebeabtriebswelle eines im Antriebsstrang eines Fahrzeugs vor der Wendegetriebeeinheit 100 angeordneten anderen Getriebes verbunden werden. Über die Abtriebswelle 2 wird die Antriebsleistung den weiteren Komponenten des Fahrzeugantriebsstrangs zugeführt. Dazu ist am abtriebsseitigen Ende der Abtriebswelle 2 ein Verbindungsflansch 22 angeordnet, über den die Abtriebswelle 2 beispielsweise mit einer Gelenkwelle verbindbar ist. Die mehrteilige Abtriebswelle 2 umfasst eine Zentralwelle 27 und eine darauf gelagerte Hauptwelle 28, die verdrehfest miteinander verbunden sind.

Die Wendegetriebeeinheit 100 umfasst auch ein Gehäuse 9, welches in der Fig. 1 an mehreren Stellen lediglich ausschnittweise schematisch dargestellt ist. Das Gehäuse 9 umschließt und schützt die Bauteile der Wendegetriebeeinheit 100. Darüber hinaus sind die Wellen der Wendegetriebeeinheit 100 in dem Gehäuse 9 gelagert und stützen sich darin ab. Die Antriebswelle 1 ragt auf einer Antriebsseite 10 aus dem Gehäuse 9 heraus, während die Abtriebswelle 2 auf der entgegengesetzten Abtriebsseite 20 aus dem Gehäuse 9 herausragt.

Die Wendegetriebeeinheit 100 entspricht grundsätzlich der Bauform eines Vorgelegegetriebes. Daher weist die Wendegetriebeeinheit 100 eine erste und eine zweite Vorgelegewelle 3, 4 auf. Die beiden Vorgelegewellen 3 und 4 sind parallel zu der Antriebswelle 1 und zu der Abtriebswelle 2 angeordnet.

Mittels einer Kupplungseinrichtung 7 können mehrere Kupplungszustände eingestellt werden. In einem ersten Kupplungszustand der Kupplungseinrichtung 7 sind die Antriebswelle 1 und die Abtriebswelle 2 über einen ersten Leistungspfad 30 und über einen zweiten Leistungspfad 40 miteinander gekoppelt. Der erste Leistungspfad 30 und der zweite Leistungspfad 40 sind im Wesentlichen gleich aufgebaut und symmetrisch zu der Zentralachse 8 angeordnet. Dabei wird die gesamte Antriebsleistung also auf die beiden Leistungspfade 30 und 40 aufgeteilt. Der erste Leistungspfad 30 verläuft von der Antriebswelle 1 über die erste Vorgelegewelle 3 zur Abtriebswelle 2. Der zweite Leistungspfad 40 verläuft von der Antriebswelle 1 über die zweite Vorgelegewelle 3 zur Abtriebswelle 2. In dem ersten und zweiten Leistungspfad 30, 40 ist jeweils ein Zwischenrad 5, 6 zwischen der Antriebswelle 1 und der jeweils zugeordneten Vorgelegewelle 3 bzw. 4 angeordnet. Die Zwischenräder 5, 6 bewirken, dass in dem ersten Kupplungszustand die Drehrichtung der Abtriebswelle 2 gegenüber der Drehrichtung der Antriebswelle 1 umgekehrt wird. Auf diese Weise wird also die Wendefunktion realisiert.

In einem zweiten Kupplungszustand der Kupplungseinrichtung 7 sind die Antriebswelle 1 und die Abtriebswelle 2 über einen dritten Leistungspfad 70 miteinander gekoppelt. Der dritte Leistungspfad 70 verläuft von der Antriebswelle 1 über die Kupplungseinrichtung 7 direkt zur Abtriebswelle 2. In dem zweiten Kupplungszustand, d.h. über den dritten Leistungspfad 70 findet keine Drehrichtungsumkehr zwischen der Antriebswelle 1 und der Abtriebswelle 2 statt.

Die Kupplungseinrichtung 7 ist in der Fig. 1 in einem dritten Kupplungszustand dargestellt, in dem der Leistungsfluss zwischen der Antriebswelle 1 und der Abtriebswelle 2 mechanisch unterbrochen ist. Die Kupplungseinrichtung 7 umfasst eine Schaltmuffe 71, mit der die verschiedenen Kupplungszustände einstellbar sind. Der dritte Kupplungszustand kann auch als Neutralstellung bezeichnet werden und entspricht einer Mittelstellung der Schaltmuffe 71, die in axialer Richtung verschiebbar ist. Wird die Schaltmuffe 71 von der dargestellten Mittelstellung axial in Richtung der Abtriebsseite 20 verschoben, so wird der erste Kupplungszustand eingestellt, in dem die Antriebsleistung von der Antriebswelle 1 über den ersten Leistungspfad 30 und gleichzeitig über den zweiten Leistungspfad 40 zur Abtriebswelle 2 verläuft. Es findet eine Leistungsaufteilung auf die beiden Leistungspfade 30 und 40 statt.

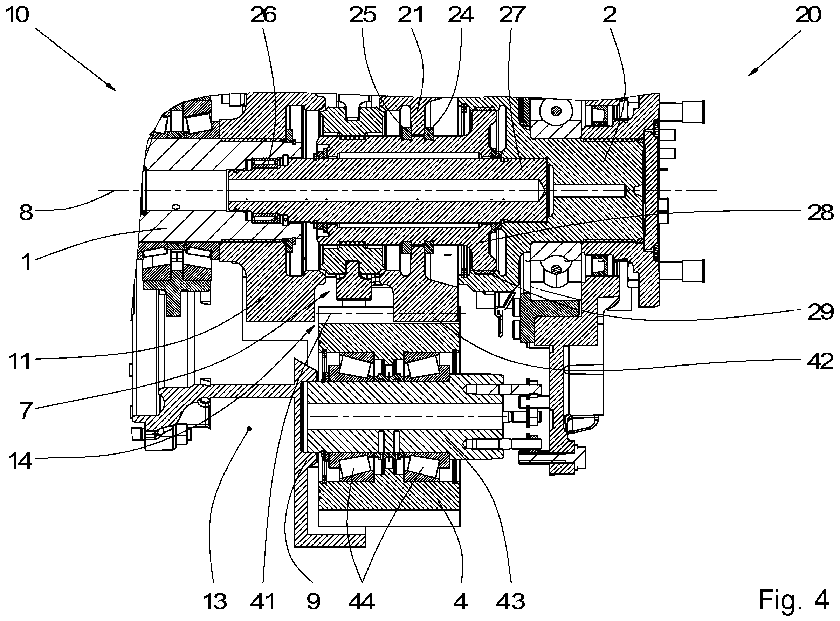

Die Zwischenräder 5 und 6 weisen jeweils eine erste Zwischenradverzahnung 51, 61 und eine zweite Zwischenradverzahnung 52, 62 auf, die gegeneinander axial versetzt angeordnet sind. Die erste Zwischenradverzahnung 51, 61 steht jeweils mit einem verdrehfest auf der Antriebswelle 1 angeordneten Antriebszahnrad 11 und die zweite Zwischenradverzahnung 52, 62 ist jeweils mit einer verdrehfest auf der zugeordneten Vorgelegewelle 3, 4 angeordneten ersten Vorgelegeverzahnung 31, 41 im Eingriff. Eine zweite Vorgelegeverzahnung 32, 42 auf jeder der beiden Vorgelegewellen 3 und 4 steht mit einem Abtriebszahnrad 21 im Eingriff. Das Abtriebszahnrad 21 ist mit der Abtriebswelle 2 verdrehfest verbindbar. Auf diese Weise wird die auf den ersten und zweiten Leistungspfad aufgeteilte Antriebsleistung durch das gemeinsame Abtriebszahnrad 21 wieder zusammengeführt bzw. summiert und auf die Abtriebswelle 2 geleitet. Das Abtriebszahnrad 21 ist in diesem Ausführungsbeispiel mit radialem Spiel auf der Abtriebswelle 2 gelagert, wodurch geometrische Abweichungen kompensiert und eine gleichmäßige Aufteilung der Antriebsleistung auf die beiden Leistungspfade 30 und 40 erreicht wird. Ein solcher radialer Freigang wird mit Hilfe einer schwimmend gelagerten Hauptwelle realisiert wie in der untenstehenden Beschreibung zu Fig. 4 noch näher erläutert.

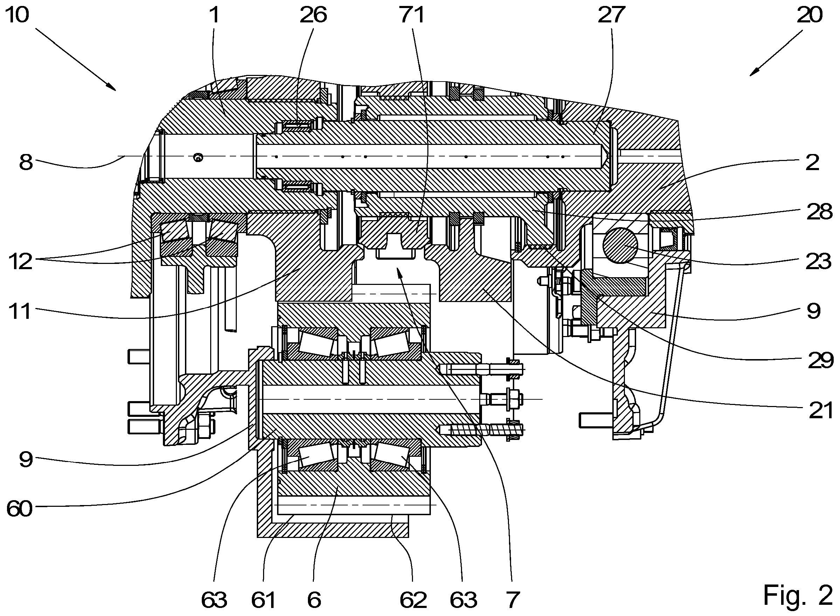

Die Fig. 2 zeigt einen Ausschnitt der Wendegetriebeeinheit 100 in einer Schnittdarstellung, wobei die Schnittebene durch die Zentralachse 8 und durch die Rotationsachse des Zwischenrades 6 verläuft. Die Antriebswelle 1 ist mittels eines Antriebswellenlagers 12 in dem Gehäuse 9 gelagert. Das Antriebswellenlager 12 umfasst in dieser Ausführung zwei Kegelrollenlager. Das verdrehfest auf der Antriebswelle 1 befestigte Antriebszahnrad 11 ist permanent im Eingriff mit der ersten Zwischenradverzahnung 61 des Zwischenrads 6. Das Zwischenrad 6 ist mittels eines Zwischenradlagers 63 in Form zweier Kegelrollenlager rotierbar gelagert auf der verdrehfest im Gehäuse 9 gelagerten Zwischenradwelle 60.

Axial versetzt zu der ersten Zwischenradverzahnung 61 ist auf dem Zwischenrad 6 eine zweite Zwischenradverzahnung 62 angeordnet. Die zweite Zwischenradverzahnung 62 ist permanent im Eingriff mit einer ersten Vorgelegeverzahnung 41, welche jedoch in einer anderen Ebene als der Schnittebene liegt und deshalb in dieser Darstellung nicht sichtbar ist. Die erste und die zweite Zwischenradverzahnung 61 und 62 sind in diesem Ausführungsbeispiel identisch ausgeführt. Daher gehen die beiden Zwischenradverzahnungen 61, 62 stetig und absatzlos ineinander über. Die beiden Zwischenradverzahnungen 61, 62 können daher vorteilhaft in nur einem Arbeitsgang gefertigt werden.

Ferner ist in der Fig. 2 die Kupplungseinrichtung 7 mit der Schaltmuffe 71 dargestellt, die beide koaxial zur Zentralachse 8 auf einem Teil der Abtriebswelle 2 angeordnet sind. Die mehrteilige Abtriebswelle 2 ist mittels eines Abtriebswellenlagers 23 rotierbar in dem Gehäuse 9 gelagert. Zusätzlich ist das antriebsseitige Ende der Abtriebswelle 2 mittels eines Nadellagers 26 in einer Zentralbohrung in der Antriebswelle 1 gelagert. Auf der Abtriebswelle 2 ist das Abtriebszahnrad 21 mit radialem Spiel gelagert.

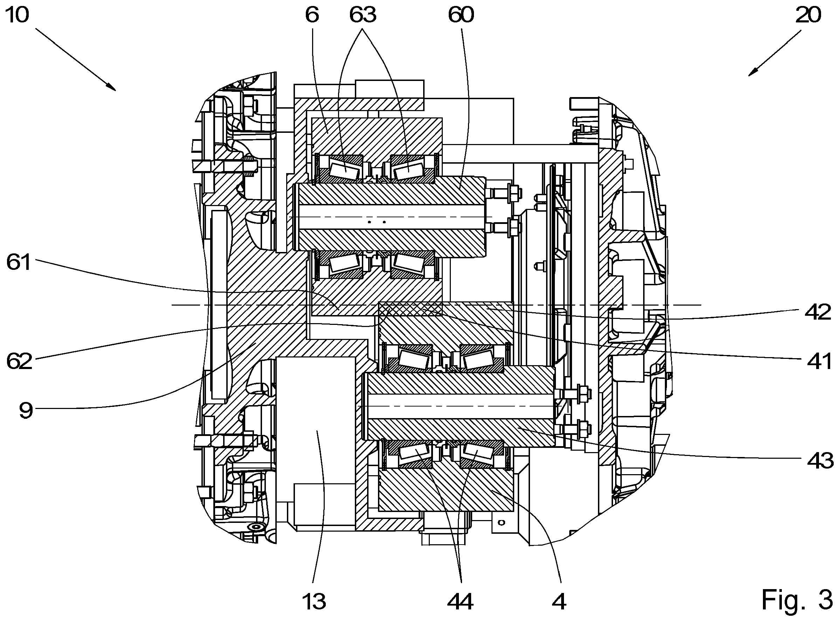

Die Fig. 3 zeigt einen weiteren Ausschnitt der Wendegetriebeeinheit 100 in einer Schnittdarstellung, wobei die Schnittebene durch die Rotationsachse des Zwischenrades 6 und durch die Rotationsachse der Vorgelegewelle 4 verläuft. Die Vorgelegewelle 4 ist im vorliegenden Ausführungsbeispiel als ein Vorgelegezahnrad ausgebildet, welches mittels eines Vorgelegelagers 44 rotierbar auf einem gehäusefesten Vorgelegebolzen 43 gelagert ist. Die Vorgelegewelle 4 weist zwei nebeneinander angeordnete Vorgelegeverzahnungen 41 und 42 auf. Die erste Vorgelegeverzahnung 41 ist permanent im Eingriff mit der zweiten Zwischenradverzahnung 62 des Zwischenrads 6.

Axial versetzt zu der ersten Vorgelegeverzahnung 41 ist auf der Vorgelegewelle 4 die zweite Vorgelegeverzahnung 42 angeordnet. Die zweite Vorgelegeverzahnung 42 ist permanent im Eingriff mit einem Abtriebszahnrad 21, welches in dieser Schnittansicht nicht dargestellt ist.

Die Vorgelegewelle 4 ist gegenüber der zugeordneten Zwischenradwelle 60 axial in Richtung der Abtriebsseite 20 versetzt angeordnet. Dadurch ergibt sich antriebsseitig der Vorgelegewelle 4 ein freier Bauraum 13. Dieser freie Bauraum 13 ist insbesondere dann von Vorteil, wenn die Wendegetriebeeinheit 100 als Anbaueinheit an ein anderes Getriebe angebaut wird. Dabei ergibt sich in einem Verbindungsbereich zwischen dem Getriebe und der angebauten Wendegetriebeeinheit in dem Bereich des freien Bauraums 13 eine verbesserte Zugänglichkeit, beispielsweise im Bereich eines Anschraubflansches, sodass Schraubverbindungen hier vorteilhaft angeordnet und verschraubt werden können.

Schließlich zeigt die Fig. 4 noch einen weiteren Ausschnitt der Wendegetriebeeinheit 100 in einer Schnittdarstellung, wobei die Schnittebene durch die Rotationsachse der Vorgelegewelle 4 und durch die Zentralachse 8 verläuft.

Die beiden auf der Vorgelegewelle 4 nebeneinander angeordneten Vorgelegeverzahnungen 41 und 42 sind identisch ausgeführt und in einem Arbeitsgang als eine durchgängige Verzahnung gefertigt worden. Die erste Vorgelegeverzahnung 41 ist permanent im Eingriff mit der zweiten Zwischenradverzahnung 62 des in dieser Schnittebene nicht sichtbaren Zwischenrads 6. Die zweite Vorgelegeverzahnung 42 ist mit dem Abtriebszahnrad 21 im Eingriff. Das Abtriebszahnrad 21 ist mit der Abtriebswelle 2 verdrehfest verbunden. Das Abtriebszahnrad 21 weist gegenüber der Abtriebswelle 2 jedoch Spiel bzw. einen Freigang in radialer Richtung auf, wodurch eine gleichmäßige Aufteilung der Antriebsleistung auf die beiden Leistungspfade 30 und 40 erreicht wird. Die Abtriebswelle 2 besteht aus mehreren Teilen und umfasst die Zentralwelle 27 und die darauf schwimmend gelagerte Hauptwelle 28 in Form einer Hohlwelle. In axialer Richtung ist das Abtriebszahnrad 21 mittels zweier Anlaufscheiben 24 und 25 auf der Abtriebswelle 2 gesichert. Eine ballige Mitnahmeverzahnung 29 ist vorgesehen, wodurch zwischen den einzelnen Teilen der Abtriebswelle 2 Winkelfehler kompensiert werden können.

In der Fig. 4 ist auch die oben beschriebene radiale Überlappung 14 bzw. ein radialer Hinterschnitt zwischen dem Antriebszahnrad 11 und der ersten Vorgelegeverzahnung 41 erkennbar. Dadurch sind die radialen Abmessungen der ersten Vorgelegeverzahnung 41 nicht beschränkt durch die Abmessungen des Antriebszahnrads 11, wodurch sich wiederum Freiheiten bei der Auslegung und Ausführung der Zwischenradverzahnungen 61, 62 und der Vorgelegeverzahnungen 41, 42 ergeben.

### Bezugszeichen

- 1: Antriebswelle
- 2: Abtriebswelle
- 3: Vorgelegewelle
- 4: Vorgelegewelle
- 5: Zwischenrad
- 6: Zwischenrad
- 7: Kupplungseinrichtung
- 8: Zentralachse
- 9: Gehäuse
- 10: Antriebsseite
- 11: Antriebszahnrad
- 12: Antriebswellenlager
- 13: Bauraum
- 14: radiale Überlappung
- 20: Abtriebsseite
- 21: Abtriebszahnrad
- 22: Abtriebsflansch
- 23: Abtriebswellenlager
- 24: Anlaufscheibe
- 25: Anlaufscheibe
- 26: Nadellager
- 27: Zentralwelle
- 28: Hauptwelle
- 29: Mitnahmeverzahnung
- 30: erster Leistungspfad
- 31: erste Vorgelegeverzahnung
- 32: zweite Vorgelegeverzahnung
- 40: zweiter Leistungspfad
- 41: erste Vorgelegeverzahnung
- 42: zweite Vorgelegeverzahnung
- 43: Vorgelegebolzen
- 44: Vorgelegelager
- 50: Zwischenradwelle
- 51: erste Zwischenradverzahnung
- 52: zweite Zwischenradverzahnung
- 60: Zwischenradwelle
- 61: erste Zwischenradverzahnung
- 62: zweite Zwischenradverzahnung
- 63: Zwischenradlager
- 70: dritter Leistungspfad
- 71: Schaltmuffe

- 100: Wendegetriebeeinheit

## Patentansprüche

1. Wendegetriebeeinheit (100) umfassend eine Antriebswelle (1), eine Abtriebswelle (2), eine erste und eine zweite Vorgelegewelle (3, 4) und eine Kupplungseinrichtung (7),
wobei in einem ersten Kupplungszustand der Kupplungseinrichtung (7) die Antriebswelle (1) und die Abtriebswelle (2) über einen über die erste Vorgelegewelle (3) verlaufenden ersten Leistungspfad (30) und über einen über die zweite Vorgelegewelle (4) verlaufenden zweiten Leistungspfad (40) miteinander gekoppelt sind, und in einem zweiten Kupplungszustand der Kupplungseinrichtung (7) die Antriebswelle (1) und die Abtriebswelle (2) über einen über die Kupplungseinrichtung (7) verlaufenden dritten Leistungspfad (70) miteinander gekoppelt sind, wobei der dritte Leistungspfad (70) nicht über die Vorgelegewellen (3, 4) verläuft,
wobei in dem ersten und zweiten Leistungspfad (30, 40) jeweils ein Zwischenrad (5, 6) zwischen der Antriebswelle (1) und der jeweils zugeordneten Vorgelegewelle (3, 4) angeordnet ist, sodass durch einen Wechsel vom ersten Kupplungszustand zum zweiten Kupplungszustand ein Drehrichtungswechsel der Abtriebswelle (2) bewirkbar ist, wobei die Zwischenräder (5, 6) jeweils eine erste Zwischenradverzahnung (51, 61) und eine zweite Zwischenradverzahnung (52, 62) aufweisen, und dass jeweils die erste Zwischenradverzahnung (51, 61) mit einem verdrehfest auf der Antriebswelle (1) angeordneten Antriebszahnrad (11) und jeweils die zweite Zwischenradverzahnung (52, 62) mit einer verdrehfest auf der zugeordneten Vorgelegewelle (3, 4) angeordneten ersten Vorgelegeverzahnung (31, 41) im Eingriff stehen, **dadurch gekennzeichnet, dass** eine zweite Vorgelegeverzahnung (32, 42) auf jeder Vorgelegewelle (3, 4) mit einem Abtriebszahnrad (21) im Eingriff stehen, und dass das Abtriebszahnrad (21) mit der Abtriebswelle (2) verdrehfest verbindbar ist.

2. Wendegetriebeeinheit (100) nach Anspruch 1, **dadurch gekennzeichnet, dass** das Abtriebszahnrad (21) mit radialem Spiel auf der Abtriebswelle (2) gelagert ist.

3. Wendegetriebeeinheit (100) nach einem der vorgenannten Ansprüche, **dadurch gekennzeichnet, dass** jeweils die erste und die zweite Vorgelegeverzahnung (31, 32, 41, 42) die gleiche Zähnezahl aufweisen.

4. Wendegetriebeeinheit (100) nach Anspruch 3, **dadurch gekennzeichnet, dass** jeweils die erste und die zweite Vorgelegeverzahnung (31, 32, 41, 42) und die erste und die zweite Zwischenradverzahnung (51, 52, 61, 62) die gleiche Zähnezahl aufweisen.

5. Wendegetriebeeinheit (100) nach einem der vorgenannten Ansprüche, **dadurch gekennzeichnet, dass** die erste und die zweite Vorgelegewelle (3, 4) gegenüber einer jeweils zugeordneten Zwischenradwelle (50, 60) axial in Richtung einer Abtriebsseite (20) der Wendegetriebeeinheit (100) versetzt angeordnet sind, wobei auf der Zwischenradwelle (50, 60) die Zwischenräder (5, 6) angeordnet sind.

6. Wendegetriebeeinheit (100) nach einem der vorgenannten Ansprüche, **dadurch gekennzeichnet, dass** die Kupplungseinrichtung (7) koaxial zu der Abtriebswelle angeordnet ist.

## Claims

1. Reversing gear unit (100) comprising a drive shaft (1), an output shaft (2), a first and a second countershaft (3, 4) and a clutch device (7),
wherein, in a first clutch state of the clutch device (7), the drive shaft (1) and the output shaft (2) are coupled to each other via a first power path (30) extending over the first countershaft (3) and via a second power path (40) extending over the second countershaft (4), and, in a second clutch state of the clutch device (7), the drive shaft (1) and the output shaft (2) are coupled to each other via a third power path (70) extending over the clutch device (7), wherein the third power path (70) does not extend over the countershafts (3, 4),
wherein in the first and second power path (30, 40), there is arranged an intermediate gear (5, 6) between the drive shaft (1) and the respective associated countershaft (3, 4), so that a rotation direction change of the output shaft (2) can be effected by a change from the first clutch state to the second clutch state, wherein the intermediate gears (5, 6) each have a first intermediate gear toothing (51, 61) and a second intermediate gear toothing (52, 62), and that the first intermediate gear toothing (51, 61) is engaged with a drive gear (11) arranged on the drive shaft (1) for conjoint rotation and the second intermediate gear toothing (52, 62) is engaged with a first counter-toothing (31, 41) arranged on the assigned countershaft (3, 4) for conjoint rotation, **characterized in that** a second counter-toothing (32, 42) on each countershaft (3, 4) is engaged with an output gear (21), and **in that** the output gear (21) can be connected to the output shaft (2) for conjoint rotation.

2. Reversing gear unit (100) according to Claim 1, **characterized in that** the output gear (21) is mounted with radial play on the output shaft (2).

3. Reversing gear unit (100) according to one of the preceding claims, **characterized in that** the first and the second counter-toothing (31, 32, 41, 42) each have the same number of teeth.

4. Reversing gear unit (100) according to Claim 3, **characterized in that** the first and the second counter-toothing (31, 32, 41, 42) and the first and second intermediate gear toothing (51, 52, 61, 62) each have the same number of teeth.

5. Reversing gear unit (100) according to one of the preceding claims, **characterized in that** the first and the second countershaft (3, 4) are arranged axially offset in the direction of an output side (20) of the reversing gear unit (5) relative to a respective assigned intermediate gear shaft (100, 6), wherein the intermediate gears (50, 50) are arranged on the intermediate gear shaft (60, 60).

6. Reversing gear unit (100) according to any one of the preceding claims, **characterized in that** the clutch device (7) is arranged coaxially to the output shaft.

## Revendications

1. Ensemble formant mécanisme d'inversion (100) comprenant un arbre d'entraînement (1), un arbre de sortie (2), un premier et un deuxième arbre intermédiaire (3, 4) et un dispositif d'accouplement (7),
l'arbre d'entraînement (1) et l'arbre de sortie (2) étant couplés l'un à l'autre par un premier chemin de puissance (30) s'étendant sur le premier arbre intermédiaire (3) et par un deuxième chemin de puissance (40) s'étendant sur le deuxième arbre intermédiaire (4) dans un premier état d'accouplement du dispositif d'accouplement (7), et l'arbre d'entraînement (1) et l'arbre de sortie (2) étant couplés l'un à l'autre par un troisième chemin de puissance (70) s'étendant sur le dispositif d'accouplement (7) dans un deuxième état d'accouplement du dispositif d'accouplement (7), le troisième chemin de puissance (70) ne s'étendant pas sur les arbres intermédiaires (3, 4),
une roue intermédiaire (5, 6) étant respectivement disposée entre l'arbre d'entraînement (1) et l'arbre intermédiaire (3, 4) respectivement associé dans le premier et le deuxième chemin de puissance (30, 40) si bien qu'un changement de sens de rotation de l'arbre de sortie (2) peut être entraîné par un changement du premier état d'accouplement au deuxième état d'accouplement, les roues intermédiaires (5, 6) comportant chacune une première denture (51, 61) de roue intermédiaire et une deuxième denture (52, 62) de roue intermédiaire, et la première denture (51, 61) de roue intermédiaire avec une roue dentée d'entraînement (11) disposée de manière solidaire en rotation sur l'arbre d'entraînement (1) et la deuxième denture (52, 62) de roue intermédiaire avec une première denture intermédiaire (31, 41) disposée de manière solidaire en rotation sur l'arbre intermédiaire (3, 4) associée étant respectivement en prise, **caractérisé en ce qu'**une deuxième denture intermédiaire (32, 42) sur chaque arbre intermédiaire (3, 4) est en prise avec une roue dentée de sortie (21), et que la roue dentée de sortie (21) peut être reliée de manière solidaire en rotation à l'arbre de sortie (2).

2. Ensemble formant mécanisme d'inversion (100) selon la revendication 1, **caractérisé en ce que** la roue dentée de sortie (21) est montée avec jeu radial sur l'arbre de sortie (2).

3. Ensemble formant mécanisme d'inversion (100) selon l'une des revendications précédentes, **caractérisé en ce que** la première et la deuxième denture intermédiaire (31, 32, 41, 42) présentent chacune le même nombre de dents.

4. Ensemble formant mécanisme d'inversion (100) selon la revendication 3, **caractérisé en ce que** la première et la deuxième denture intermédiaire (31, 32, 41, 42) et la première et la deuxième denture (51, 52, 61, 62) de roue intermédiaire présentent chacune le même nombre de dents.

5. Ensemble formant mécanisme d'inversion (100) selon l'une des revendications précédentes, **caractérisé en ce que** le premier et le deuxième arbre intermédiaire (3, 4) sont disposés de manière décalée axialement en direction d'un côté de sortie (20) de l'ensemble formant mécanisme d'inversion (100) par rapport à un arbre de roue intermédiaire (50, 60) respectivement associé, les roues intermédiaires (5, 6) étant disposées sur l'arbre intermédiaire (50, 60).

6. Ensemble formant mécanisme d'inversion (100) selon l'une des revendications précédentes, **caractérisé en ce que** le dispositif d'accouplement (7) est disposé coaxialement à l'arbre de sortie.
